# EUROPÄISCHE PATENTSCHRIFT

(11) **EP 0 872 002 B1**
(45) Veröffentlichungstag und Bekanntmachung des Hinweises auf die Patenterteilung: **04.08.1999**
(21) Anmeldenummer: 96907264.4
(22) Anmeldetag: 23.03.1996
(51) Int. Cl.: H02B 1/36

(54) **NIEDERSPANNUNGS-SCHALTANLAGE ZUR ABGABE ODER VERTEILUNG ELEKTRISCHER ENERGIE**
LOW-VOLTAGE SWITCH SYSTEM FOR SUPPLYING OR DISTRIBUTING ELECTRIC POWER
APPAREILLAGE DE COMMUTATION BASSE TENSION POUR FOURNIR OU DISTRIBUER DE L'ENERGIE ELECTRIQUE

(30) Priorität: 28.03.1995 DE 19511347
(43) Veröffentlichungstag der Anmeldung: 21.10.1998
(73) Patentinhaber: Klöckner-Moeller GmbH, 53115 Bonn (DE)
(72) Erfinder: WINKLER, Johannes, D-53332 Bornheim (DE)
(86) Internationale Anmeldenummer: DE9600508
(87) Internationale Veröffentlichungsnummer: WO9630982

(56) Entgegenhaltungen:
- WO-A-93/18564
- US-A- 3 142 003

## Beschreibung

Die Erfindung betrifft eine Niederspannungs-Schaltanlage nach dem Oberbegriff des Anspruches 1.

In der Energieverteilung sind Niederspannungs-Schaltanlagen bestehend aus in Schaltschränken befindlichen Schaltgeräten oder Gerätegruppen, auch bekannt als Motor-, Energie- oder MCC-Verteiler, zum Schutz von Anlagen und Motoren seit langem bekannt und bewährt.

Die Abgabe und Verteilung der elektrischen Energie wird mit gemeinsamen Stromsammelschienen über austauschbare Geräte oder Gerätegruppen erreicht, wobei diese Gerätegruppen Schalt- und Schutzkomponenten enthalten und mit Steckkonktaten auf die Stromsammelschienen greifen.

Die Gerätegruppen sind bei Verteilern dieser Art mindestens teilweise Steckbar, wobei mindestens der Laststromabgriff mittels auf die Stromsammelschienen greifender Steckkontakte erfolgt.

Der Laststromabgang und die Steuerstromverbindung oder dergleichen können entweder steckbar oder aber auch fest verdrahtet sein.

Die Schalt- und Schutzkomponenten können Leistungsschalter, Motorschutzschalter, Schütze und Kombinationen dieser Komponenten, wie z.B. eine Wende-, Stern-Dreieck-Kombination oder dergleichen sein.

Aus der DE-A1 42 10 679 ist ein derartiger Energieverteiler bekannt geworden, das parallel zur Einschubrichtung verlaufende Querstreben aufweist, die Führungsmittel für die Einschübe aufweisen, wobei die Führungsmittel als stufenförmige oder Z-förmige Führungsansätze einstückig aus dem Material herausgedrückt sind.

Die Führungsmittel sind zwar relativ kostengünstig, wenn das Feldsammelschienensystem jedoch aus einer kompakten Einheit bestehen soll, dann sind zusätzlich Querstreben für die Führung erforderlich.

In der EP 0 186 556 ist ein Feldsammelschienensystem mit einem Schienenkanal gezeigt und beschrieben, wobei die Einschübe an den Seiten angeordnet sind. Das Schienensystem bildet eine kompakte Einheit, die in einem beliebigen Metallschrank angeordnet werden kann. Eine Führung der Einschübe in diesem Sinne ist jedoch nicht vorhanden.

Ferner ist in der WO 93/18564 ein Energieverteiler mit an Wandelementen angeordneten Führungsschlitzen gezeigt und beschrieben, der jedoch konstruktiv aufwendig ist.

Aufgabe der Erfindung ist es deshalb, eine Niederspannungs-Schaltanlage nach dem Oberbegriff des Anspruches 1 zu schaffen, die bei geringem konstruktiven Aufwand mit einer Führung der Gerätegruppen versehen ist, wobei das Feldsammelschienensystem als eine kompakte Einheit ausgestattet und somit in einem beliebigen Schaltschrank unterzubringen ist.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Durch die kennzeichnenden Merkmale des Anspruches 1 kann ein Einschubverteiler mit relativ hoher Bedienfreundlichkeit zu relativ geringen Herstellungskosten geschaffen werden.

Anhand der Zeichnung, in der bevorzugte Ausführungsbeispiele dargestellt sind, sollen die Erfindung, weitere Ausgestaltungen und Verbesserungen der Erfindung und weitere Vorteile näher beschrieben und erläutert werden.

Es zeigt:
- Fig. 1: eine perspektivische Darstellung eines Verteilerfeldes,
- Fig. 2: eine auseinandergezogene, perspektivische Darstellung des Feldsammelschienensystems,
- Fig. 3: eine Seitenansicht eines Seitenschenkels des Schienenkanals,
- Fig. 4: eine Einzelheitdarstellung der Führungsnasen von vorne,
- Fig. 5: eine Einzelheitdarstellung der Führungsnasen von der Seite,
- Fig. 6: eine zweidimensionale Darstellung des wannenförmigen Schienenkanalteiles von vorne,
- Fig. 7: eine zweidimensionale Darstellung des wannenförmigen Schienenkanalteiles von oben,
- Fig. 8: eine auseinandergezogene, perspektivische Darstellung des Einschubes und
- Fig. 9: eine perspektivische Darstellung des Einschubes.

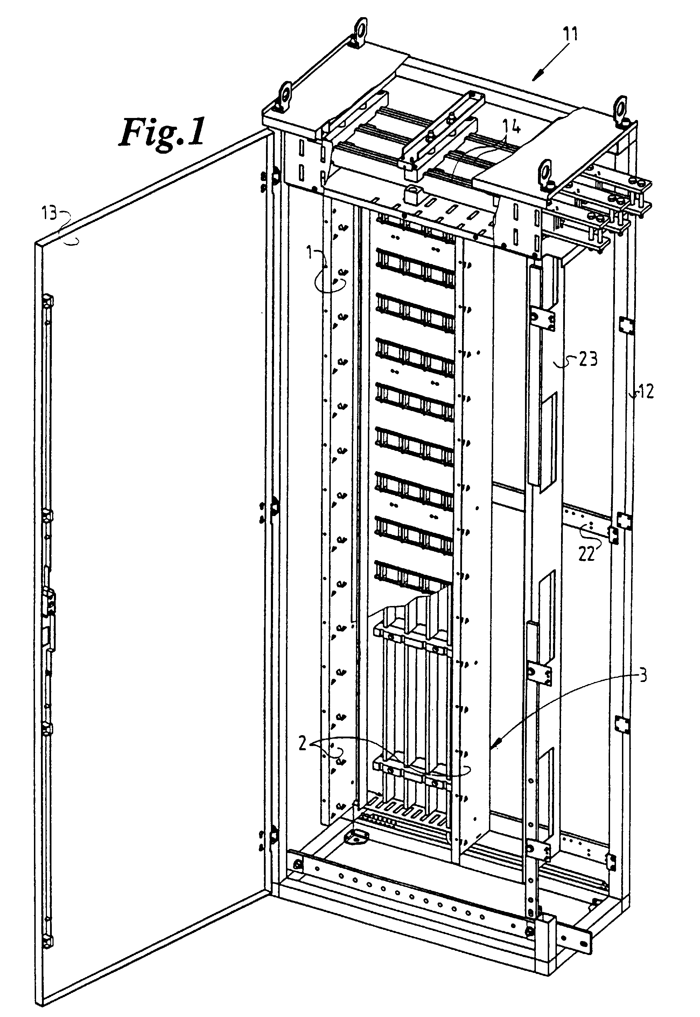

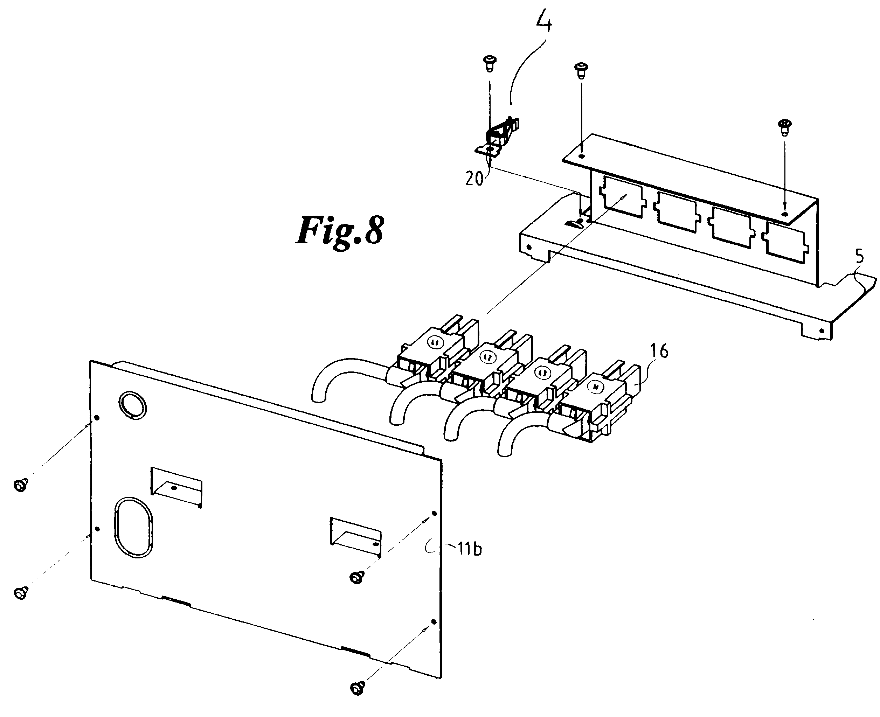

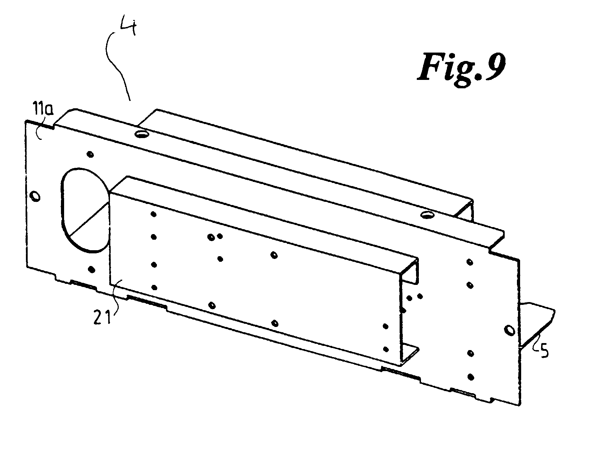

Das in Fig. 1 gezeigte Verteilerfeld 11 der Niederspannungs-Schaltanlage besteht im wesentlichen aus einem Metallgehäuse, d.h. einem Rahmengestell 12, Verkleidungselementen und einer Schaltschranktür 13. Weiterhin besteht das Verteilerfeld 11 aus einem oben und parallel zur Deckenebene angeordneten Hauptsammelschienensystem 14, einem senkrecht zur Bodenebene angeordneten Feldsammelschienensystem 15 mit einem Schienenkanal 3 und Einschübe 4, die näher in den Figuren 8 und 9 gezeigt sind.

Die an den Einschüben 4 befindlichen Schaltgeräte oder Gerätegruppen von Schaltgeräten, wie Leistungsschalter, Motorschutzschalter, Schütze oder dergleichen, greifen mittels Laststromstecker 16 auf die Feldsammelschienen 17.

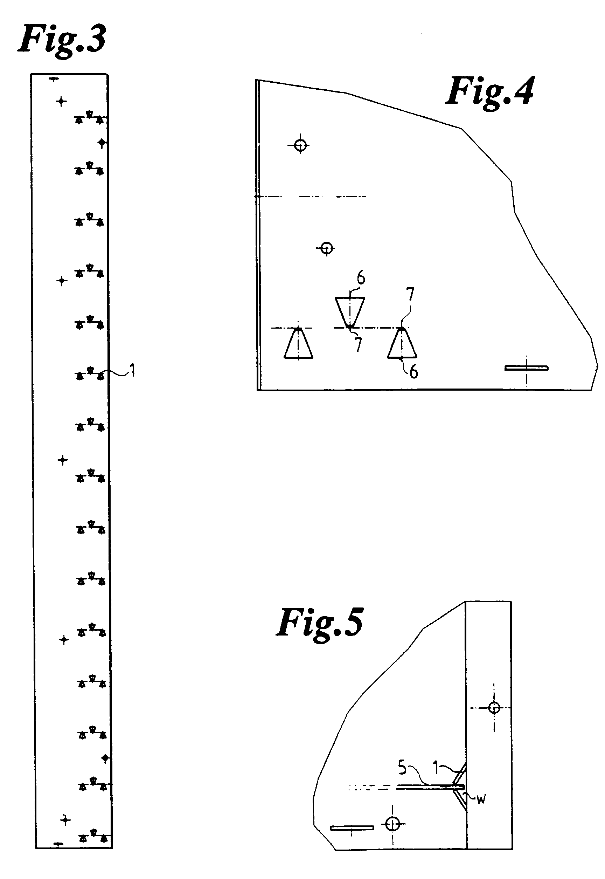

Die Einschübe 4 weisen parallel zur Bodenebene verlaufende Führungskanten 5 auf, die zwischen den Führungsansätzen 1 bei eingefahrenem Einschub 4 liegen, wie anhand der Fig. 5 zu sehen ist. Die Führungsansätze 1 sind an der Innenseite von Seitenschenkeln des im wesentlichen U-förmigen Schienenkanals 3 angeordnet, wobei die Einschübe 4 zwischen den Seitenschenkeln gehalten werden.

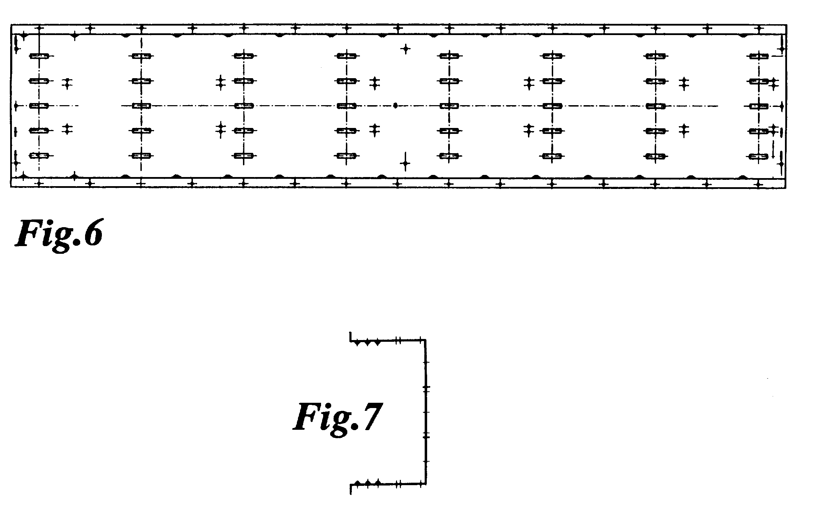

Der Schienenkanal 3 besteht aus einem wannenförmigen Schienenkanalteil 18, dessen Form in Fig. 7 gut zu sehen ist. Weiterhin besteht der Schienenkanal 3 aus einer Schottwand 9 zur Abdeckung der Feldsammelschienen 17.
Die in dem Schienenkanal 3 zwischen den Seitenschenkeln 2 befestigte Schottwand 9 ist mit Öffnungen 10 für die Laststromstecker 16 versehen, wobei die Schottwand 9 aus einem Blechabschnitt besteht.
Die Seitenschenkel 2 schließen etwa mit der Einschubmontageplatte 11a, 11b ab.
Zur Versteifung und Verschraubung des Einschubes 4 mit Schrauben 25 ist der Schienenkanal 3 mit zwei an den Seitenschenkeln 2 parallel zur Rückwandebene abgewinkelten Abschnitten 8 versehen.

Zur Erdung der Einschübe 4 ist eine L-förmige Profilschiene 19 direkt auf der Schottplatte 9 angeordnet, wobei die Einschübe einen seitlich angeordneten Erdungskontakt 20 aufweisen.

Die Führungsansätze 1 sind aus dem Material der Seitenschenkel 2 des Schienenkanals herausgestanzt und als oberhalb und unterhalb der Führungskante 5 des Einschubes greifende Führungsnasen vorgesehen, wobei diese schräg herausgedrückt sind, vorzugsweise unter einen Winkel (w) von etwa 30 bis 40 Winkelgrade.

Wie Fig. 4 zeigt bestehen die Führungsansätze 1 aus drei Führungsansätzen 1 jeweils für eine Führungsseite, wobei die oberhalb und unterhalb der Führungskante 5 des Einschubes 4 liegenden Führungsansätze 1 gegeneinander versetzt angeordnet sind.

Wie Fig.3 zeigt sind fünfzehn untereinanderliegende Führungsebenen vorhanden, wobei ein Einschub durchaus mehrere Führungsebenen in Anspruch nehmen kann, wie anhand der Größenunterschiede der in der Figuren 8 und 9 gezeigten Einschübe deutlich wird.

Weiterhin sind die Führungsansätze 1 etwa dreieckförmig. Diese weisen einen an der Seitenschenkel 2 einstückig angeformten Grundschenkel 6 und eine als Stützpunkt für den Einschub dienende Ecke 7 auf.

Ferner ist, wie Fig. 9 zeigt, ein Abstandselement 21 in Form einer U- oder C-förmigen Montageplatte auf der Einschubmontageplatte lla, llb angeordnet.

Zur Abtrennung des Geräteraumes und des Kundenanschlußraumes ist eine parallel zu den Seitenschenkeln 2 angeordnete Trennwand 23 vorhanden, die an mehreren mit dem Rahmengestell 12 befestigten Querträgern 22 festgelegt wird.

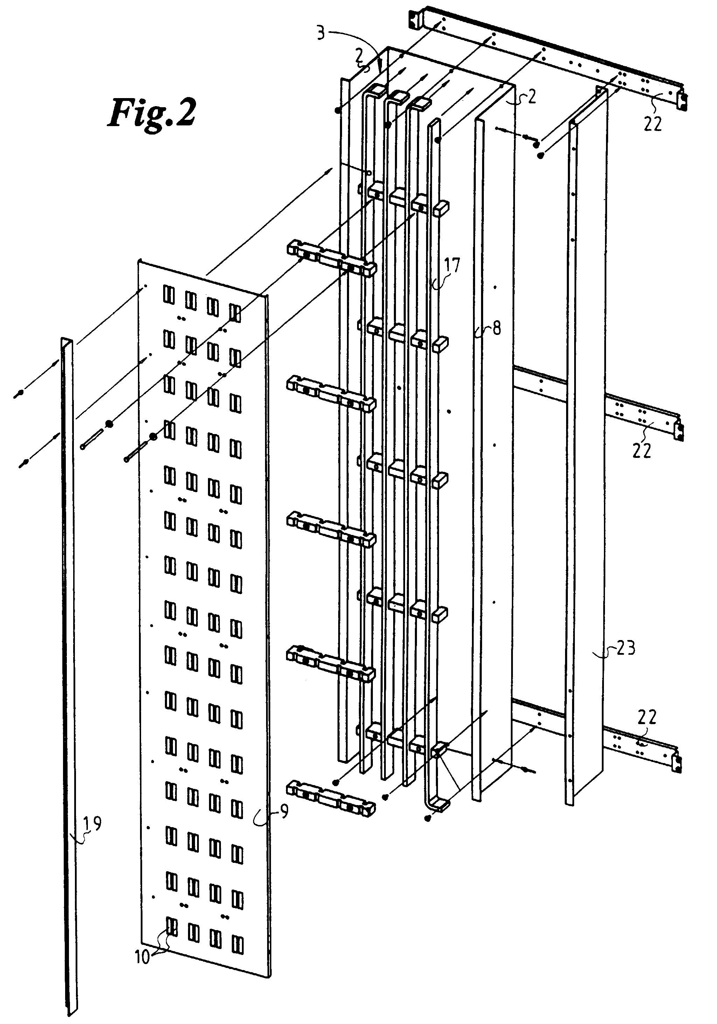

Die Querträger 22, die in den Figuren 1 und 2.dargestellt sind, sind auch für die Befestigung des Schienenkanals 3 vorgesehen.

## Patentansprüche

1. Niederspannungs-Schaltanlage zur Abgabe oder Verteilung elektrischer Energie mit in Einschüben (4) befindlichen Schaltgeräten oder Gerätegruppen von Schaltgeräten, wie Leistungsschalter, Motorschutzschalter, Schütze oder dergleichen, die in dem Schaltschrank eine Führung aufweisen und mit einem schrankförmigen Metallgehäuse (12) und mindestens einer Schaltschranktür (13) versehen sind, wobei mindestens die elektrische Verbindung von den Stromsammelschienen zu den Schaltgeräten steckbar ist, wobei die Führungsansätze (1) herausgestanzt sind und die Einschübe (4) parallel zur Bodenebene verlaufende Führungskanten (5) aufweisen, wobei ferner die Stromsammelschienen an Hauptsammelschienen angeschlossenen Feldsammelschienen (17) sind, **dadurch gekennzeichnet,** daß die Führungsansätze (1) an der Innenseite von Seitenschenkeln (2) eines U-förmigen Schienenkanals (3) angeordnet sind, wobei die Einschübe (4) zwischen den Seitenschenkeln gehalten werden und daß die Führungsansätze (1) aus dem Material der Seitenschenkel (2) des Schienenkanals herausgestanzt sind.

2. Niederspannungs-Schaltanlage nach Anspruch 1, dadurch gekennzeichnet, daß die Führungsansätze (1) als oberhalb und unterhalb der Führungskante (5) des Einschubes greifende Führungsnasen vorgesehen sind.

3. Niederspannungs-Schaltanlage nach Anspruch 1 oder 2, dadurch gekennzeichnet, daß die Führungsansätze (1) aus mindestens drei Führungsansätzen (1) für eine Führungsseite bestehen, wobei die oberhalb und unterhalb der Führungskante (5) des Einschubes (4) liegenden Führungsansätze (1) gegeneinander versetzt angeordnet sind.

4. Niederspannungs-Schaltanlage nach einem der vorhergehenden Ansprüche, dadurch gekennzeichnet, daß die Führungsansätze (1) etwa dreieckförmig sind, aus einem an der Seitenschenkel (2) einstückig angeformten Grundschenkel (6) bestehen und eine als Stützpunkt für den Einschub dienende Ecke (7) aufweisen.

5. Niederspannungs-Schaltanlage nach einem der vorhergehenden Ansprüche, dadurch gekennzeichnet, daß die Führungsansätze (1) schräg herausgedrückt sind.

6. Niederspannungs-Schaltanlage nach einem der vorhergehenden Ansprüche, dadurch gekennzeichnet, daß die Führungsansätze (1) unter einen Winkel (w) von etwa 30 bis 40 Winkelgrade herausgedrückt sind.

7. Niederspannungs-Schaltanlage nach einem der vorhergehenden Ansprüche, dadurch gekennzeichnet, daß die Feldsammelschienen (17) senkrecht zur Bodenebene und nebeneinander an der Rückwand angeordnet sind.

8. Niederspannungs-Schaltanlage nach einem der vorhergehenden Ansprüche, dadurch gekennzeichnet, daß der Schienenkanal (3) zwei an den Seitenschenkeln (2) parallel zur Rückwandebene abgewinkelte Abschnitte (8) aufweist.

9. Niederspannungs-Schaltanlage nach einem der vorhergehenden Ansprüche, dadurch gekennzeichnet, daß in dem Schienenkanal (3) eine zwischen den Seitenschenkeln (2) befestigte Schottwand (9) mit Öffnungen (10) aus einem Blechabschnitt angeordnet ist.

10. Niederspannungs-Schaltanlage nach einem der vorhergehenden Ansprüche, dadurch gekennzeichnet, daß die Seitenschenkel (2) etwa mit der Einschubmontageplatte (11a, 11b) abschließen.

11. Niederspannungs-Schaltanlage nach einem der vorhergehenden Ansprüche, dadurch gekennzeichnet, daß zur Erdung der Einschübe (4) ist eine L-förmige Profilschiene (19) direkt auf einer Schottplatte (9) angeordnet ist, wobei die Einschübe (4) einen seitlich angeordneten Erdungskontakt (20) aufweisen.

12. Niederspannungs-Schaltanlage nach einem der vorhergehenden Ansprüche, dadurch gekennzeichnet, daß ein Abstandselement (21) in Form einer U- oder C-förmigen Montageplatte auf einer Einschubmontageplatte (11a, 11b) angeordnet ist.

13. Niederspannungs-Schaltanlage nach einem der vorhergehenden Ansprüche, dadurch gekennzeichnet, daß sie bis 2500 Ampere Nennstrom vorgesehen ist.

14. Niederspannungs-Schaltanlage nach einem der vorhergehenden Ansprüche, dadurch gekennzeichnet, daß zur Abtrennung eines Geräteraumes und eines Kundenanschlußraumes eine parallel zu den Seitenschenkeln (2) angeordnete Trennwand (23) vorhanden ist, die an mehreren mit einem Rahmengestell (12) befestigten Querträgern (22) festgelegt wird.

15. Niederspannungs-Schaltanlage nach einem der vorhergehenden Ansprüche, dadurch gekennzeichnet, der Schienenkanal (3) an mehreren mit einem Rahmengestell (12) befestigten Querträgern (22) festgelegt wird.

## Claims

1. Low-voltage switchgear assembly for the delivery or distribution of electrical energy with switching devices or groups of switching devices such as power switches, motor protection switches, contactors, or similar devices located in slide-in units (4), presenting a guidance in the switch cabinet, and being provided with a cabinet-shaped metal casing (12) and with at least one switch-cabinet door (13), while at least the electrical connection between the collecting bus bars and the switching devices is pluggable, while the guiding projections (1) are punched out, and while the slide-in units (4) present guiding edges (5) which run in parallel to the bottom plane, and while the collecting bus bars are field bus bars (17) connected to main bus bars, **characterized in that** the guiding projections (1) are arranged at the inside of lateral legs (2) of a U-shaped bar channel (3), while the slide-in units (4) are held between the lateral legs, and in that the guiding projections (1) are punched out of the material of the lateral legs (2) of the bar channel.

2. Low-voltage switchgear assembly as claimed in claim 1, **characterized in that** the guiding projections (1) are provided as guide noses engaging above and below the guiding edge (5) of the slide-in unit.

3. Low-voltage switchgear assembly as claimed in claim 1 or 2, **characterized in that** the guiding projections (1) consist of at least three guiding projections (1) for one guiding side, while the guiding projections (1) arranged above and below the guiding edge (5) of the slide-in unit (4) are arranged in an offset position with regard to one another.

4. Low-voltage switchgear assembly as claimed in any of the above-mentioned claims, **characterized in that** the guiding projections (1) are approximately triangular in shape, and consist of a base leg (6) formed integral with the lateral leg (2), and present a corner (7) which serves as a supporting point for the slide-in unit.

5. Low-voltage switchgear assembly as claimed in any of the above-mentioned claims, **characterized in that** the guiding projections (1) are pressed out in an oblique way.

6. Low-voltage switchgear assembly as claimed in any of the above-mentioned claims, **characterized in that** the guiding projections (1) are pressed out at an angle (w) of approximately 30 to 40 angular degrees.

7. Low-voltage switchgear assembly as claimed in any of the above-mentioned claims, **characterized in that** the field bus bars (17) are located vertically with regard to the bottom plane and side by side at the rear wall.

8. Low-voltage switchgear assembly as claimed in any of the above-mentioned claims, **characterized in that** the bar channel (3) presents two angular sections (8) presenting an angle at the lateral legs (2) in parallel to the plane of the rear wall.

9. Low-voltage switchgear assembly as claimed in any of the above-mentioned claims, **characterized in that** a bulkhead panel (9) with openings (10) made of a sheet-metal section is located in the bar channel (3) and fixed between the lateral legs (2).

10. Low-voltage switchgear assembly as claimed in any of the above-mentioned claims, **characterized in that** the lateral legs (2) end approximately at the same place as the slide-in mounting plate (11a, 11b).

11. Low-voltage switchgear assembly as claimed in any of the above-mentioned claims, **characterized in that** an L-shaped sectional bar (19) is located directly on the a bulkhead plate (9) for the earthing/grounding of the slide-in units (4), while the slide-in units (4) present an earthing/grounding contact (20) which is located laterally.

12. Low-voltage switchgear assembly as claimed in any of the above-mentioned claims, **characterized in that** a spacing element (21) formed like a U-shaped or C-shaped mounting plate is located on one slide-in mounting plate (11a, 11b).

13. Low-voltage switchgear assembly as claimed in any of the above-mentioned claims, **characterized in that** it is provided for a 2500 Amperes current rating.

14. Low-voltage switchgear assembly as claimed in any of the above-mentioned claims, **characterized in that** a partition wall (23) is arranged in parallel to the lateral legs (2), and secured at several transverse supports (22) fixed with a mounting frame (12) in order to allow separation into a device compartment, and a compartment for client connections.

15. Low-voltage switchgear assembly as claimed in any of the above-mentioned claims, **characterized in that** the bar channel (3) is secured at several transverse supports (22) fixed with a mounting frame (12).

## Revendications

1. Installation de distribution électrique à basse tension pour la fourniture et/ou la répartition de courant électrique, à appareils de coupure ou groupes d'appareils de coupure disposés dans des éléments embrochables (4), tels que sectionneurs de puissance, disjoncteurs-protecteurs, contacteurs-disjoncteurs ou similaires, lesquels présentent un guidage dans l'armoire électrique et sont pourvus d'un boîtier métallique (12) en forme d'armoire et d'une porte (13) d'armoire électrique au moins, où au moins la liaison électrique des barres collectrices aux appareils de coupure est à embrochement, où les saillies de guidage (1) sont estampées et où les éléments embrochables (4) présentent des arêtes de guidage (5) s'étendant parallèlement au plan de base, les barres collectrices étant en outre des barres collectrices de champ (17) raccordées à des barres collectrices principales, **caractérisée en ce que** les saillies de guidage (1) sont disposées sur la face interne des montants latéraux (2) d'une canalisation de barres (3) en forme de U, les éléments embrochables (4) étant maintenus entre les montants latéraux, et en ce que les saillies de guidage (1) sont estampées dans le matériau des montants latéraux (2) de la canalisation de barres.

2. Installation de distribution électrique à basse tension selon revendication 1, **caractérisée en ce que** les saillies de guidage (1) sont formées comme tenons de guidage au-dessus et au-dessous des arêtes de guidage (5) de l'élément embrochable.

3. Installation de distribution électrique à basse tension selon revendication 1 ou 2, **caractérisée en ce que** les saillies de guidage (1) consistent en trois saillies de guidage (1) au moins par face de guidage, les saillies de guidage (1) disposées au-dessus et au-dessous des arêtes de guidage (5) de l'élément embrochable (4) étant décalées.

4. Installation de distribution électrique à basse tension selon l'une des revendications précédentes, **caractérisée en ce que** les saillies de guidage (1) sont à peu près de forme triangulaire, et consistent en une base (6) formée d'une seule pièce sur le montant latéral (2) et en un sommet (7) ayant fonction de point d'appui pour l'élément embrochable.

5. Installation de distribution électrique à basse tension selon l'une des revendications précédentes, **caractérisée en ce que** les saillies de guidage (1) sont estampées pour saillir obliquement.

6. Installation de distribution électrique à basse tension selon l'une des revendications précédentes, **caractérisée en ce que** les saillies de guidage (1) sont estampées pour présenter un angle de saillie (w) de 30 à 40 degrés environ.

7. Installation de distribution électrique à basse tension selon l'une des revendications précédentes, **caractérisée en ce que** les barres collectrices de champ (17) sont disposées perpendiculairement au plan de base et l'une à côté de l'autre contre la paroi du fond.

8. Installation de distribution électrique à basse tension selon l'une des revendications précédentes, **caractérisée en ce que** la canalisation de barres (3) présente deux segments (8) pliés en équerre sur les montants latéraux (2), parallèlement au plan de la paroi du fond.

9. Installation de distribution électrique à basse tension selon l'une des revendications précédentes, **caractérisée en ce qu'**une cloison de séparation (9) à ouvertures (10) consistant en une section de tôle est fixée dans la canalisation de barres (3) entre les montants latéraux (2).

10. Installation de distribution électrique à basse tension selon l'une des revendications précédentes, **caractérisée en ce que** les montants latéraux (2) affleurent à peu prés contre la plaque de montage de l'élément embrochable (1la, 11b).

11. Installation de distribution électrique à basse tension selon l'une des revendications précédentes, **caractérisée en ce qu'**une barre profilée (19) en forme de L est disposée immédiatement contre une plaque de cloisonnement (9) pour la mise à la terre des éléments embrochables (4), lesdits éléments embrochables (4) présentant un contact de mise à la terre (20) disposé latéralement.

12. Installation de distribution électrique à basse tension selon l'une des revendications précédentes, **caractérisée en ce qu'**un élément d'espacement (21) sous forme de plaque de montage en U ou en C est disposé sur une plaque de montage d'élément embrochable (11a, 11b).

13. Installation de distribution électrique à basse tension selon l'une des revendications précédentes, **caractérisée en ce qu**' elle est prévue pour un courant nominal s'élevant jusqu'à 2500 ampères.

14. Installation de distribution électrique à basse tension selon l'une des revendications précédentes, **caractérisée en ce qu'**une paroi de séparation (23) est disposée parallèlement aux montants latéraux (2) pour la séparation d'une chambre d'appareil et d'une chambre de raccordement d'opérateur (23), ladite paroi de séparation étant montée sur plusieurs traverses (22) fixées sur un cadre(22).

15. Installation de distribution électrique à basse tension selon l'une des revendications précédentes, **caractérisée en ce que** la canalisation de barres (3) est montée sur plusieurs traverses (22) fixées sur un cadre (12).
